# EUROPÄISCHE PATENTSCHRIFT

(11) **EP 2 865 987 B1**
(45) Veröffentlichungstag und Bekanntmachung des Hinweises auf die Patenterteilung: **30.05.2018**
(21) Anmeldenummer: 14189219.0
(22) Anmeldetag: 16.10.2014
(51) Int. Cl.: G01B 11/06, G01B 11/25

(54) **Verfahren und Scanner zum berührungslosen Ermitteln der Position und dreidimensionalen Form von Produkten auf einer laufenden Fläche**
Method and scanner for the non-contact determination of the position and three-dimensional shape of products on a moving surface
Procédé et scanner destinés à la détermination sans contact de la position et de la forme tridimensionnelle de produits sur une surface déroulante

(30) Priorität: 25.10.2013 DE 102013111761
(43) Veröffentlichungstag der Anmeldung: 29.04.2015
(73) Patentinhaber: Gerhard Schubert GmbH, 74564 Crailsheim (DE)
(72) Erfinder: Nasraoui, Dr. rer.nat., Abdelmalek, 74564 Crailsheim (DE); Schinner, Karl-Ludwig, 86911 Dießen am Ammersee (DE)
(74) Vertreter: Weickmann & Weickmann PartmbB

(56) Entgegenhaltungen:
- CA-A1- 2 375 013
- DE-A1-102009 015 204
- DE-A1-102012 206 472
- US-A1- 2011 075 156
- US-B1- 6 754 370

## Beschreibung

### I. Anwendungsgebiet

Die Erfindung betrifft optische Detektionsverfahren zum Ermitteln einer dreidimensionalen Form.

### II. Technischer Hintergrund

In vielen Bereichen der Industrie, insbesondere in der Verpackungstechnik, existiert die Problemstellung, dass auf einer laufenden Fläche, z.B. einem Förderband, unregelmäßig verteilt liegende Produkte hinsichtlich ihrer Position und nach Möglichkeit auch ihrer Höhe, zusätzlich bei in der Aufsicht unrunden Produkten auch deren Drehlage und bei in der Aufsicht nicht rotations-symmetrischen Produkten deren geometrische Form oder Oberflächenmerkmale, erfasst werden müssen. Dadurch können im Verlauf des Förderbandes angeordnete Roboter, sog. Picker, zielgenau diese Produkte ergreifen, hochheben und z.B. in eine Schachtel zielgenau ablegen können. Bisher wurde dies mittels eines zeilenförmig quer über die Breite der Fläche laufenden Auflicht-Zeilenscanners durchgeführt, der telezentrisch, also lotrecht auf die Fläche gerichtet, linienförmige Aufnahmen anfertigt, die durch die Auswerteeinheit hintereinander gereiht unter Berücksichtigung der Laufgeschwindigkeit der Fläche ein durchgängiges Bild der Fläche ergaben, indem die Produkte eine andere Farbe besitzen als die Fläche selbst und dadurch die Produkte und somit deren Position erkannt werden konnten. Dabei kann aber aufgrund einer Förderband-Verschmutzung der Kontrast zwischen Produkt und Fläche für die genaue Lokalisierung des Produkts nicht mehr ausreichend sein.

Mit dieser Methode konnte allerdings grundsätzlich nicht die Höhenlage, also die Dicke des Objektes, ermittelt werden. Und wenn die Oberfläche des Produktes in optischer Hinsicht problematisch war (glänzend, spiegelnd, geringer Farbkontrast gegenüber der Fläche des Untergrundes etc.), war diese optische Erfassung selbst für die Positionsbestimmung manchmal nicht ausreichend. Vor allem dann nicht, wenn die reflektierende Oberfläche gerichtet reflektiert, wie etwa eine Alufolie oder eine Metall-Oberfläche.

Dies gilt vor allem für Situationen, in denen flache Produkte wie beispielsweise Kekse oder längliche, stabförmige Produkte auch teilweise übereinander liegend auf der Fläche liegen können. Dann kann anhand der Kontur zwar unter Umständen erkannt werden, dass hier nicht ein, sondern zwei Objekte teilweise überlappend vorliegen, aber es kann nicht immer erkannt werden, welches der beiden beteiligten Objekte das unten liegende und welches das oben liegende ist, und wie hoch es aufragt.

Diese Information ist aber für die nachfolgenden Picker notwendig, damit ein solcher Stapel oder Haufen von Produkten beginnend mit dem obersten Produkt von mehreren Pickern hintereinander abgebaut werden kann.

Natürlich gibt es bereits Methoden zur Erfassung der dreidimensionalen Form von Produkten, auch auf einem laufenden Band:
- Bei der Stereoskopie werden von zwei Kameras aus unterschiedlichen Blickwinkeln Aufnahmen der Szene angefertigt. Dann wird versucht, in beiden Aufnahmen texturierte Helligkeitsverteilungen zu finden, die deckungsgleich zueinander sind und einen zugehörigen Bereich definieren. Bringt man diese Bereiche zur Überdeckung (Kreuzkorrelation), lässt sich aus der notwendigen Verschiebung zum In-Deckung-Bringen die Höhe dieser Bereiche bestimmen, aber eben nur dort, wo auch eine Textur vorhanden ist. Für alle anderen Regionen bleibt die Höhe undefiniert.
- Bei der Streifenprojektion wird ein definiertes Streifenmuster aufgestrahlt und unter einem anderen Betrachtungswinkel abfotografiert. Mittels Triangulation kann daraus die Lage jedes Punktes im Raum im Streifenmuster erfasst werden.
   Das Muster ist jedoch aufgrund seiner wiederkehrenden Struktur mehrdeutig. Um aber gleichzeitig einen großen Höhenbereich und eine enge Stützpunktdichte (Auflösung) erreichen zu können, müssen in der Regel mehrere Muster nacheinander auf die Szene projiziert und abgetastet werden.
   Deshalb eignet sich das Verfahren nicht für sich währenddessen bewegende Szenen.
   Außerdem erfordert dieses Verfahren eine möglichst dunkle Umgebung, und dennoch können vermeintliche Kanten in den Streifen nicht immer von echten Objektkanten unterschieden werden.
- Beim Shape from Shading werden Objekte mit unterschiedlichen Beleuchtungen aus unterschiedlichen Richtungen bestrahlt, und aus den sich ergebenden Schattierungen können durch aufwändige algorithmische Verfahren die Höhen einer Szene berechnet werden.
   Stark und fein strukturierte Oberflächen sind durch dieses Verfahren kaum detektierbar, und Oberflächen mit schlechten optischen Eigenschaften (z.B. Reflektion) sind auch kaum detektierbar.

Selbst wenn es anwendbar ist, ist wegen seines hohen Aufwandes dieses Verfahren bisher industriell kaum angewandt, sondern wird eher in der Forschung, wie etwa in der Astronomie, eingesetzt.

Aus der US 2011/0075156 A1 sind ein Verfahren gemäß dem Oberbegriff des Anspruchs 1 und eine Vorrichtung gemäß dem Oberbegriff des Anspruchs 14 bekannt. Aus der DE 10 2012 206 472 A1 ist es bekannt mehrere Beamer zur Aufstrahlung von Muster verschiedener Farben zur Verbesserung der Beleuchtung zu verwenden.

### III. Darstellung der Erfindung

### a) Technische Aufgabe

Es ist daher die Aufgabe gemäß der Erfindung, ein Verfahren zum Ermitteln der Position und dreidimensionalen Form von Produkten auf einer laufenden Fläche zur Verfügung zu stellen sowie eine hierfür geeignete Vorrichtung.

### b) Lösung der Aufgabe

Diese Aufgabe wird durch die Merkmale der Ansprüche **1** und **14** gelöst. Vorteilhafte Ausführungsformen ergeben sich aus den Unteransprüchen.

Hinsichtlich des Verfahrens wird diese Aufgabe dadurch gelöst, dass die Koordinaten von möglichst vielen Punkten auf der Oberfläche der mit Produkten bestückten Fläche wie folgt ermittelt werden:
In der X-Richtung - der Richtung der Relativbewegung zwischen der Fläche und dem Scanner - ist die Position bekannt, da in dieser Richtung die Position der Zeilenkamera zu der Fläche bekannt ist, beispielsweise indem die Zeilenkamera an einer bestimmten, bekannten und fixen Position in X-Richtung oberhalb der Fläche montiert ist, vorzugsweise alle an der gleichen Position in X-Richtung.

In Y-Richtung, der Querrichtung auf der Fläche zur Längsrichtung, wird die Position bestimmt aus dem wenigstens abschnittsweise in Y-Richtung eindeutig kodierten und in einer definierten Richtung und Position aufgestrahlten Muster, welches mittels zum Beispiel einer Zeilenkamera entlang einer in Z-Richtung über die Fläche verlaufenden Bildzeile aufgenommen wird: Die Position einer Kante einer optischen Markierung des Musters, insbesondere jeder Kante jeder optischen Markierung, entlang der Bildzeile ist bekannt, wenn diese Kante auf die Fläche aufgestrahlt ist, die als Höhenlage = Null definiert wird. Dies ist die Soll-Position der Kante in Y-Richtung.

Trifft die Kante der Markierung dagegen auf ein Produkt und damit in einer Höhenlage größer als Null auf, ergibt sich für die Kante eine von der Soll-Position in Y-Richtung abweichende Ist-Position, die als Ist-Position in Y-Richtung abgespeichert wird. Die Höhenlage in Z-Richtung dieses Punktes wird bestimmt aus dem Versatz in Y-Richtung zwischen der Soll-Position und der Ist-Position, die nach trigonometrischen Grundsätzen aufgrund der bekannten Lage der Kamera in Y-Richtung sowie der Höhe der Kamera in Z-Richtung und dem bekannten Blickwinkel der Kamera zu jeder der eindeutig kodierten Kanten bestimmt werden kann.

Damit sind für jeden Schnittpunkt einer Kante einer optischen Markierung mit der Bildzeile alle drei Raumkoordinaten X, Y, Z, bekannt.

Damit kann entlang einer Bildzeile zunächst ein Höhenprofil erstellt werden. Aufgrund der Zuordnung jeder Aufnahme auf der Bildzeile zu einem bestimmten Zeitpunkt während der Relativbewegung kann der Aufnahme eine bestimmte Position in Längsrichtung (X-Richtung) entlang der sich bewegenden Fläche zugeordnet werden, und es kann aus den einzelnen Bildzeilen-Höhenprofilen ein dreidimensionales Höhenprofil der gesamten Fläche samt darauf liegenden Produkten erstellt werden.

Aus diesem dreidimensionalen Höhenprofil ist nicht nur erkennbar, wo und in welcher Position und gegebenenfalls Drehlage sich Produkte auf der Fläche befinden, sondern auch, wie und in welcher Anordnung zwei oder mehr Produkte ganz oder teilweise übereinander liegen und in welcher spezifischen Anordnung.

Das kodierte Muster weist ferner in Zeilenrichtung unterschiedliche Bereiche auf, innerhalb derer die Farbe des aufgestrahlten Musters jeweils gleich ist, die Farbe von einem Bereich zum benachbarten Bereich jedoch wechselt. Diese unterschiedlich farbigen Bereiche können jeweils von einem Projektor oder Beamer aufgestrahlt werden, wodurch es möglich wird, das Muster nicht nur von einem einzigen Beamer oder Projektor aufzustrahlen, sondern von in Zeilenrichtung mehreren aufeinander folgenden Projektoren oder Beamern, und anhand der Farbe dennoch differenziert ausgewertet werden können.

Denn die Beamer sind so angeordnet bzw. die Überlappung ist so gewählt, dass sich die benachbarten Bereiche mit der unterschiedlichen Farbe des Musters auch auf der maximal detektierbaren Höhenlage noch unmittelbar aneinander anschließen oder gar noch geringfügig überlappen, was zur Folge hat, dass auf allen niedrigeren Höhenniveaus, insbesondere auf Höhe der Fläche, diese Bereiche und damit die Farben der Markierungen einander immer überlappen.

Wenn als optische Markierungen im Abstand zueinander angeordnete, vorzugsweise parallel zueinander angeordnete, Streifen verwendet werden, ist die Auswertung besonders einfach. Insbesondere können dann auch die zwischen den Streifen vorhandenen Lücken - ebenso wie die Streifen selbst - hinsichtlich ihrer Anzahl, Anordnung, Reihenfolge, Breite ebenso als optische Verwendung genutzt werden wie die Streifen selbst.

Die Auflösung des Verfahrens hängt damit von der vorkommenden maximalen Breite eines Streifens oder einer Lücke ab.

Die Bildzeile verläuft vorzugsweise lotrecht zur Verlaufsrichtung der Streifen, welche vorzugsweise mit der Längsrichtung und Bewegungsrichtung der Fläche übereinstimmt, um die Auswertung nicht unnötig zu komplizieren.

Aus dem gleichen Grund steht auch die Betrachtungsrichtung, mit der die Kamera auf die Fläche gerichtet ist, lotrecht zur Fläche.

Das optisch aufgestrahlte Muster ist wenigstens abschnittsweise eindeutig kodiert. Dies bedeutet, dass das gesamte Muster entweder nur aus einem Abschnitt besteht, in dem sich das Muster nicht wiederholt, oder es besteht aus mehreren hintereinander angereihten solchen Abschnitten, wobei dann vorzugsweise auch der Übergang des Musters von einem Abschnitt zum nächsten eine Kodierung aufweisen muss, die mit keiner Stelle innerhalb eines der Abschnitte übereinstimmt.

Dabei gibt es eine Mindest-Abschnittslänge, definiert in Anzahl der Markierungen, die man an einer beliebigen Stelle innerhalb des Musters betrachten muss, um eindeutig die Position einer Markierung innerhalb des Musters bestimmen zu können.

Das optisch aufgestrahlte Muster bestehend aus Streifen und Lücken jeweils verschiedener Breiten (beispielsweise **700** Streifen mit jeweils **3** verschiedenen Breiten) ist im gesamten Bildbereich einer Kamera eindeutig. Das Muster ist so aufgebaut, dass, wenn man mit einer Kombination von beispielsweise **3** verschiedenen Streifen und **3** verschiedenen Lücken von links nach rechts das Muster schrittweise Streifen für Streifen durchläuft, man diese spezifische **6**er-Kombination nur einmal im gesamten Muster finden kann.

Die Länge eines Abschnittes muss dabei so groß sein, dass allein aufgrund der Lage des Abschnitts innerhalb des Betrachtungsbereiches der entweder einzig vorhandenen Kamera oder der mehreren vorhandenen Kameras, zum Beispiel aufgrund der Schräge der Blickrichtung in diesen Abschnitt, eindeutig für die Kamera bekannt ist, um welchen Abschnitt es sich bei der Auswertung handelt.

Innerhalb eines einfarbigen Bereiches der aufgestrahlten Markierungen können mehrere der eindeutig kodierten Abschnitte des Musters hintereinander vorliegen.

Wenn in der beschriebenen Art und Weise mehrere hinsichtlich ihrer Aufstrahlbereiche teilweise überlappende Beamer das Muster in abwechselnd unterschiedlich gefärbten Bereichen aufstrahlen, kann die Zeilenaufnahme auch mit Hilfe mehrere Zeilenkameras durchgeführt werden, die sich dann entlang der Zeilenrichtung jeweils in der Mitte zwischen zwei Projektoren oder Beamern befinden und deren Bildbereich auf der maximal zu detektierenden Höhenlage sich mit dem Bildbereich der übernächsten Kamera unmittelbar aneinander anschließen oder geringfügig überlappen.

Wenn jede der Kameras dabei in der Lage ist, die beiden Farben der Markierungen der benachbarten Beamer, deren Muster in ihrem Bildbereich aufgestrahlt sind, zu detektieren, und auch nach Farbe zu selektieren, können bei der Auswertung der Kamerasignale in jedem Bereich nur die Aufnahmen mit der Farbe des dort vorliegenden Musters verwendet werden, und die übrigen Aufnahmen der Markierungen mit anderen Farben verworfen oder anderweitig verwendet werden.

Da sich die Bereiche teilweise überlappen, werden dadurch zumindest teilweise redundante Informationen erzielt, die die Qualität des Auswertungsergebnisses verbessern.

Zusätzlich ist durch die abwechselnde Anordnung mehrerer Beamer und mehrerer Kameras ein modulartiger Aufbau des Scanners möglich, je nach der Breite der abzutastenden Fläche.

Da die Oberfläche der Produkte als auch der Fläche hinsichtlich ihrer optischen Eigenschaften schwierig sein kann (beispielsweise reflektierende Oberflächen), können punktförmige Lichtquellen herangezogen werden, um für jeden Bildpunkt eine ungestörte Bildinformation aus der jeweils nicht geblendeten Kamera zu gewinnen.

Dies gilt in gleicher Weise für Produkte, die unter transparenten Folien liegen. Damit kann die Höhe von in Klarsichtfolien verpackten Produkten ermittelt werden. Ferner können die Aufnahmen der Streifenkameras auch unter zusätzlicher Belichtung mit flächigem Licht, insbesondere Mischlicht, aufgebracht beispielsweise mittels einer LED-Leiste oder einer anderen Mischlichtquelle, durchgeführt werden, wobei die Menge an aufgestrahltem Mischlicht abgestuft werden kann und bei mehreren Belichtungsstufen Aufnahmen angefertigt werden können.

Je nachdem, ob und wie stark die Oberflächen reflektieren, werden bestimmte Belichtungsstärken eine bessere oder schlechtere Qualität der Aufnahme ergeben. Aus den mehreren zur Verfügung stehenden Aufnahmen werden dann - gegebenenfalls unterteilt für einzelne Teilbereiche entlang der Lichtleiste - die jeweils beste Aufnahmequalität, also mit der am besten geeigneten Belichtungsstufe, ausgewählt. Die Relativ-Bewegung der Fläche zum Scanner im zeitlichen Versatz zwischen den einzelnen Aufnahmen wird bei der Auswertung rechnerisch berücksichtigt, wofür die Auswerteeinheit auch die Geschwindigkeit der Relativ-Bewegung jeweils aktuell kennt.

Zusätzlich zu den Aufnahmen bei aufgestrahltem Muster können - insbesondere unter zusätzlicher Beleuchtung mit flächigem Licht, insbesondere Mischlicht, beispielsweise mittels einer LED-Leiste oder einer anderen Mischlichtquelle - auch Farbaufnahmen entlang der Bildzeile von diesem Oberflächenbereich ohne aufgestrahlte Muster, so genannte Original-Aufnahmen - in schwarz-weiß oder in Farbe - von den Kameras angefertigt werden.

Die rechnerisch zusammengesetzten, in der Regel einzeiligen, Streifenbilder ergeben dann ein Streifenbild über die gesamte Fläche und die rechnerisch zusammengesetzten Original-Aufnahmen ergeben ein gesamtes Farbbild oder schwarz-weiß-Bild über die gesamte Fläche.

Die aus den Streifenbildern ermittelten Raumkoordinaten jedes ausgewerteten Punktes auf der Fläche werden zwar primär den nachfolgenden Maschinen, beispielsweise einer Pickerstraße, zur Verfügung gestellt, jedoch kann sich auch der Bediener zum Beispiel auf einem Monitor entweder das Originalfarbbild der Fläche oder das Streifenbild der Fläche oder ein Graustufenbild oder ein Farbabstufungsbild der Fläche darstellen lassen. Dabei korrelieren die Grauabstufungen jeweils zu einer bestimmten Höhenlage und auch bei einem Farbbild bringen auf Wunsch die Farbabstufungen jeweils eine bestimmte Höhenlage zum Ausdruck.

Zusätzlich kann ein Abgleich der Aufnahmen bei ausgestrahlte Muster mit den Original-Aufnahmen ohne ausgestrahltes Muster zu einer Verbesserung des Ergebnisses, also der Daten, aus denen Muster-Aufnahmen verwendet werden. Dies ist vor allem dann sinnvoll, wenn die Produkte stark reliefartige Oberflächen aufweisen, die das aufgestrahlte Muster so stark deformieren, dass eine eindeutige Zuordnung des aufgenommenen Musters zu den Referenzmustern erschwert wird.

Ferner können sowohl aus den Streifenaufnahmen als auch aus den Original-Aufnahmen oder aus der Kombination von beiden - die jeweils mit einem starken Betrachtungswinkel aufgenommen sind - allein durch Umrechnung mittels der Auswerteeinheit verzerrungsfreie, zweidimensionale Aufsicht-Bilder von der Position und Drehlage der Produkte auf der Fläche erzeugt werden, indem eine Umrechnung in telezentrische, also exakt einer Aufsicht von oben auf jeden einzelnen Punkt entsprechende, Aufsicht-Bilder erfolgt.

Hinsichtlich der Vorrichtung wird die Aufgabe dadurch gelöst, dass quer, vorzugsweise im rechten Winkel zur Bewegungsrichtung, über der Fläche eine Projektionsvorrichtung angeordnet ist, die in der Lage ist, das wenigstens abschnittsweise eindeutig kodierte Muster aus optisch abtastbaren Markierungen quer über die Fläche entlang aufzustrahlen. Diese Projektionsvorrichtung umfasst in Zeilenrichtung mindestens zwei oder mehr beabstandete Beamer oder Projektoren, mit einer Anordnung gemäß vorstehenden Erläuterungen, wobei zwei benachbarte der wenigstens zwei Beamer ihre Muster in unterschiedlicher Farbe aufstrahlen.
Ferner ist - vorzugsweise an der gleichen Längsposition zu der Fläche - wenigstens eine oder in Zeilenrichtung beabstandet mehrere Zeilenkameras vorhanden, die in der Lage sind, entlang einer quer zu den Markierungen verlaufenden Bildzeile die Ist-Position jeder Kante der Markierungen entlang der Bildzeile in Zeilenrichtung zu ermitteln. Bei mehreren beabstandeten Projektoren oder Beamern sind vorzugsweise auch mehrere Zeilenkameras angeordnet, die jeweils einen Abschnitt entlang der Zeile betrachten, und die jeweils in der Mitte zwischen zwei Projektoren oder Beamern angeordnet sind.
Die Blickwinkel der einzelnen Kameras sind dadurch weniger schräg, und die Verzerrungen der Markierungen, insbesondere der Streifen, geringer als bei Abtasten mit einer einzigen Zeilenkamera, die dann an den Rändern sehr viel schräger auf die Bildzeile blickt oder sehr viel weiter oben über der Fläche angeordnet sein müsste, was jedoch wegen der dann sehr geringen Winkelunterschiede der Blickrichtungen zu den einzelnen Kanten der optischen Markierungen sehr viel schwerer auswertbar ist.
Projektionsvorrichtung und Kamera zusammen mit einer entsprechenden Auswerteeinheit für die Bildsignale der Kamera bilden den Zeilenscanner, vor allem wenn diese in einem gemeinsamen Gehäuse untergebracht sind.
Die Vorrichtung kann ferner einen Bildschirm umfassen, der in der Lage ist, sowohl die hintereinander von der Zeilenkamera ausgegebenen Zeilenbilder, aufsummiert als Streifenmuster, darzustellen, oder auch die hintereinander aufsummierten Original-Farbaufnahmen als Farbbild auszugeben, oder die Flächenanteile auf der Fläche abhängig von ihrer Höhenlage in unterschiedlichen Farbabstufungen oder Graustufen darzustellen.

### c) Ausführungsbeispiele

Ausführungsformen gemäß der Erfindung sind im Folgenden beispielhaft näher beschrieben. Es zeigen:

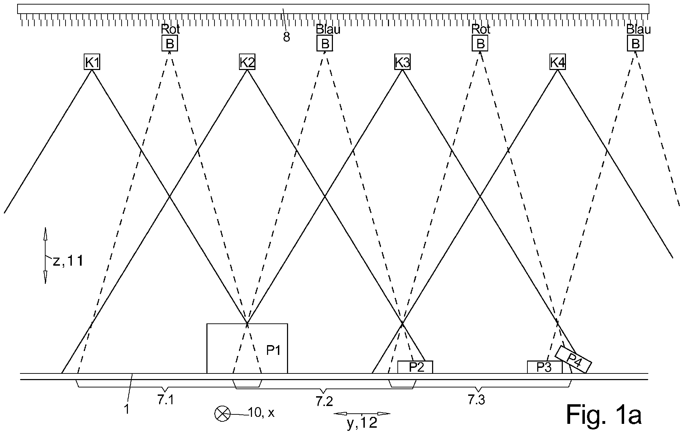

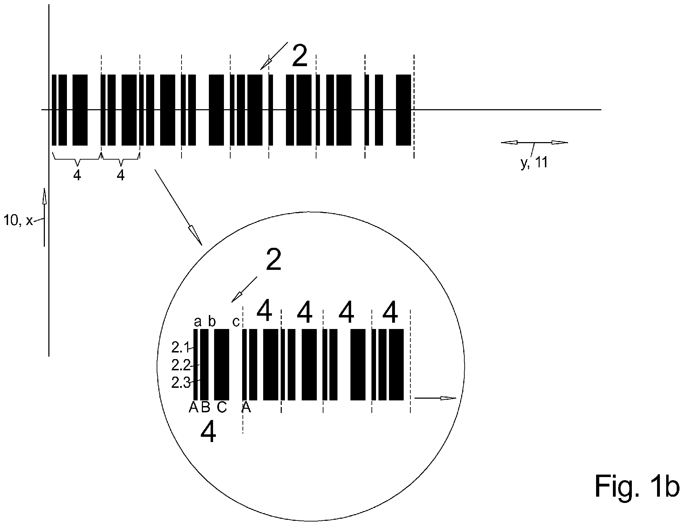

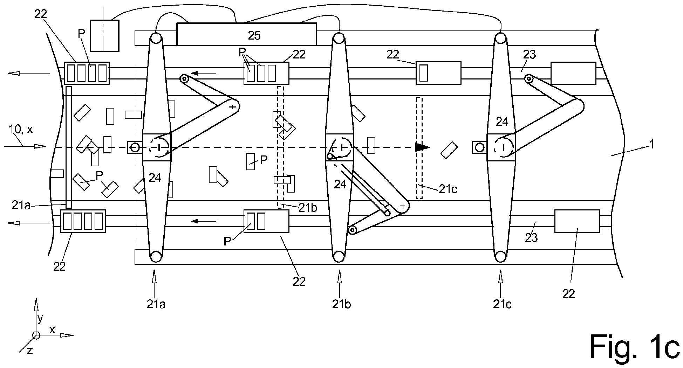

- Figur **1**a:: den Scanner betrachtet in Laufrichtung der Fläche,
- Figur **1**b:: eine Aufsicht auf die Fläche bei aufgestrahltem Muster,
- Figur **1**c:: eine typische Anwendung der erfindungsgemäßen Vorrichtung,
- Figur **2:**: einen Detailausschnitt aus Figur **1**a mit einem anders geformten Produkt,
- Figur **3**a:: das Streifenbild bei einer senkrechten Seitenfläche eines Produktes, und

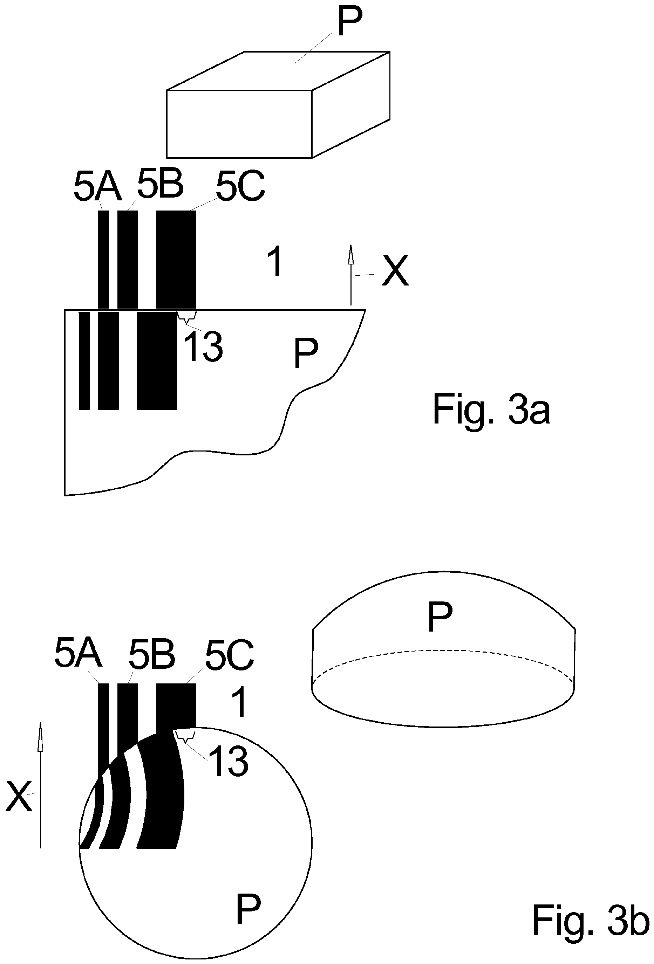

- Figur **3**b:: das Streifenbild bei einem konvex gewölbten Produkt.

In **Figur 1c** ist eine typische Anwendung für eine Zeilenscanner **20** gemäß der Erfindung dargestellt:
Dabei handelt es sich in der Aufsicht von oben um eine so genannte PickerStraße, mittels der auf einem sich in Laufrichtung **X, 10** bewegenden Transportband, der Fläche **1,** Produkte **P** unregelmäßig verteilt angeliefert werden, die von den mehreren in Verlaufsrichtung **10** des Transportbandes **1** hintereinander darüber angeordneten Picker **21**a, b, c einzeln ergriffen und in Behälter **22** in exakter Positionierung abgelegt werden sollen.

Die Behälter werden in diesem Fall auf beiden Seiten des Transportbandes **1** mittels je eines Behälter-Bandes **23** herangeführt, in diesem Fall in Gegenrichtung zu Laufrichtung des Transportbandes **1,** was jedoch nicht Bedingung ist.
In diesem Fall bestehen die Picker aus einem Unterarm, der um eine vertikale Achse gesteuert schwenkbar an einem Oberarm befestigt ist und dieser wiederum um eine Vertikalachse gesteuert schwenkbar an einer Basis befestigt ist. Am freien Ende des Unterarmes ist der Sauger oder eine andere Greifeinrichtung für die Produkte angeordnet, und zwar verstellbar in vertikaler Richtung.
Auf diese Art und Weise kann der Picker jedes in seinem Greifbereich gerade durch laufende Produkt P erreichen und greifen, muss dafür aber natürlich wissen, an welcher Position und in welcher Drehlage sich das entsprechende Produkt P zu welchem Zeitpunkt auf der sich bewegenden Fläche **1** unter ihm hindurch bewegt.
Zusätzlich können die Produkte P - vor allem wenn es sich um etwa plattenförmige Produkte P wie etwa Kekse handelt - auch teilweise übereinander liegend angeordnet sein. Dann benötigt der Scanner zum Abbauen eines solchen Stapels natürlich auch die Information über die Höhenlage der einzelnen Produkte, um gezielt das oben liegende Produkt ergreifen und in den Behälter **22** ablegen zu können, so dass danach das nächste darunterliegende Produkt - in der Regel vom nächsten Scanner - erfasst und entfernt werden kann, und auf diese Art und Weise der Stapel abgebaut werden kann.
Die Position, bei in der Aufsicht unrunden Produkten (P) auch die Drehlage, und die Höhenlage der Produkte P wird durch mindestens einen sich quer über die Fläche **1** erstreckenden Zeilenscanner **21**a, der in Laufrichtung des Transportbandes **1** vor den Pickern angeordnet ist, ermittelt, und die Daten an die Steuerung **25** weitergegeben, die die Bewegungen der Picker steuert.

Um gerade den Abbau von Stapeln von übereinanderliegenden oder teilweise übereinander liegenden Produkten zu erleichtern, können in Laufrichtung des Bandes **1** beanstandet auch mehrere Scanner **21**a, b, c vorhanden sein, die vorzugsweise so angeordnet sind, dass sich in Laufrichtung vor jeweils einem der Picker jeweils einer der Scanner befindet.

**Figur 1a** zeigt im Detail betrachtet in Laufrichtung **10** der Fläche **1** einen Zeilenscanner **21:**
Dabei sind entlang der Y-Richtung, der Zeilenrichtung **12,** mehrere im gleichen Abstand zueinander angeordnete Beamer B vorhanden, von denen jeder ein Muster **2** von aufeinanderfolgenden, zueinander parallelen Streifen **5** mit Lücken **6** dazwischen auf die Fläche **1** aufstrahlt, wie in **Figur 1b** dargestellt.

Die Streifen **2** erstrecken sich in der Verlaufsrichtung **10,** der Bewegungsrichtung der Fläche **1.** Die Beamer B sind dabei in Zeilenrichtung Y so zueinander beabstandet, dass unter Berücksichtigung des Aufstrahlwinkels β ihrer Aufstrahlbereiche sich ihre Aufstrahlbereiche zumindest auf der maximal abzutastenden Höhe, also beispielsweise auf der Oberfläche des Produktes P**1**, noch berühren oder gar überlappen, also auf tieferliegenden Höhenlagen immer einander überlappen. In diesem Überlappungsbereich werden also rote und blaue Anteile des Musters, insbesondere Streifen, durcheinander aufgestrahlt.

Zwei benachbarte Beamer B strahlen ihre Muster **2** in unterschiedlicher Farbe auf, wobei sich in diesem Fall die Beamer mit den Farben Rot und Blau jeweils aufeinanderfolgend abwechseln.

Auf der Fläche **1** sind einige der hinsichtlich Position und Drehlage abzutastenden Produkte P**1** bis P**4** dargestellt, wobei Produkt P**1** eine Höhe besitzen soll, die der maximalen abzutastenden Höhe über der Fläche **1** entsprechen soll.

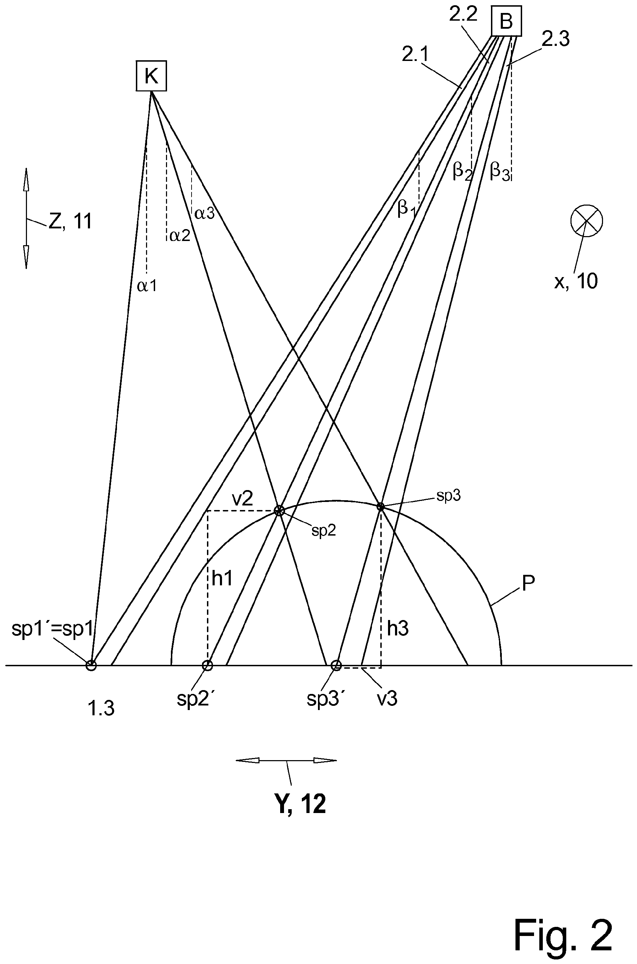

Jeweils in der Mitte zwischen zwei benachbarten Beamern B ist eine der Zeilenkameras K**1** bis K**4** angeordnet, die nur je einen Teil der Bildzeile **3** im Querverlauf die Streifen **2,** wie in **Figur 1b** in der Aufsicht dargestellt, abfotografieren.
Die Kameras K**1** bis K**4** sind hinsichtlich ihrer Höhe über der Fläche **1** und unter Berücksichtigung ihres Blickwinkels α so angeordnet, dass zumindest auf der maximal abzutastenden Höhe, also beispielsweise auf Höhe der Oberseite des Produktes P**1**, sich die Blickbereiche einer Zeilenkamera K**1** mit dem der übernächsten Zeilenkamera K**3** zumindest berühren, gegebenenfalls bereits überlappen, und somit in tiefer liegenden Höhenlagen immer überlappen.
Die Blickbereiche der Kameras K**1** bis K**4** überlappen sich somit zu mehr als **50** %, sodass eine vollständig redundante Abtastung entlang der Bildzeile **3** gegeben ist.
Die Kameras K**1** bis K**4** können alle von den Beamern B aufgestrahlten Farben erkennen und abfotografieren, die angeschlossene Auswerteeinheit kann jedoch nach den einzelnen Farben der Beamer selektieren.
Sowohl die Position der von den Kameras K**1** bis K**4** abzutastenden Bildzeile **3** in X-Richtung als auch die Position der einzelnen Beamer B und Zeilenkameras K**1** bis K4 sowohl hinsichtlich ihrer Höhe als auch ihrer Position in Zeilenrichtung **12** als auch die jeweiligen Blickwinkel α der Zeilenkameras als auch Aufstrahlwinkel β der Beamer sind bekannt.
Die Ermittlung der Position und Lage der einzelnen Produkte P**1** bis P**4** auf der Fläche **1** kann dann wie folgt durchgeführt werden:
Zu bestimmen ist für möglichst viele Punkte der Fläche **1** oder der Oberfläche eines darauf liegenden Produktes P**1**, P**2** die Position in Zeilenrichtung **12** als auch die Höhenlage in Z-Richtung **11,** wie in **Figur 2** dargestellt.

Die Position in X-Richtung ist aus der fixen Positionierung des Scanners **21** und damit der Bildzeile **3** und der bekannten Bewegungsgeschwindigkeit der Fläche **1** für jede Zeilenaufnahme gegeben.

In **Figur 1b** sind von dem Streifenmuster **2,** welches der Beamer B aufstrahlt, beispielhaft einige Streifen **5** dargestellt.

Untersucht werden immer die Kanten, also Beginn und Ende in Zeilenrichtung **12,** der optischen Markierungen **2.1, 2.2** und **2.3,** hier der Streifen **5**A, B, C und der Lücken **6**a, b, c zwischen den Streifen **5**A, B, C, also die Übergänge von Streifen **5** zur Lücke **6** am Schnittpunkt mit der Bildzeile **3,** entlang der die Figur **2** geschnitten ist.

Von den dargestellten Streifen **5** ist die Vorderkante und die Hinterkante hinsichtlich ihrer Position in Y-Richtung **12** auf der Fläche **1** bekannt, definiert durch die bekannte Position des Beamers B in Y-Richtung, seiner Höhe über der Fläche **1** und dem Abstrahlwinkel β**1**, β**2** des diese Kante bildenden Lichtstrahls vom Beamer B aus. Ebenso ist die Position der das Zeilenbild **3** aufnehmenden Kamera K in Y-Richtung als auch deren Höhe in Z-Richtung über der Fläche bekannt und auch der Blickwinkel α**1**, α**2**, α**3** jedes einzelnen Kamerapixels in Richtung Bildzeile **3.**

Für den Streifen **5**A ist somit für dessen Vorderkante aus den Daten des Beamers B die Soll-Position SP**1**' bekannt, die gegeben ist, wenn die Vorderkante des Streifens **5**A auf der Fläche **1** selbst auftrifft.

Von der Kamera K, die diese Vorderkante abfotografiert, ist die Ist-Position SP**1** in Y-Richtung bekannt.

Da für die Vorderkante des Streifens **5**A Soll-Position SP₁' gleich Ist-Position SP**1** ist, kann daraus geschlossen werden, dass diese Vorderkante auf der Fläche **1** liegt und nicht erhöht auf einem Produkt P.

Für die Vorderkante des Streifens **5**B ergibt sich dagegen in Zeilenrichtung Y ein unterschiedlicher Wert in dieser Y-Richtung zwischen Soll-Position SP**2**' und Ist-Position SP**2**. Der dazwischen bestehende Versatz V**2** entspricht einer bestimmten Höhenlage h**₁**, der sich wahlweise aus der Position der Kamera K unter Berücksichtigung des Blickwinkels α**2** dieses Kamerapixels oder aus der Position des Beamers B unter Berücksichtigung des Aufstrahlwinkels β**2** für die Vorderkante dieses Streifens **5**A automatisch errechnen lässt.

Gleiches gilt für alle anderen Kanten der Streifen, die auf der Oberfläche des Produktes P zu liegen kommen, beispielsweise für die Vorderkante des Lichtstreifens **5**C.

Wie Figur **1**b zeigt, kommen in dem Muster **2** drei verschiedene Streifen **5**A, B, C vor, die eine unterschiedliche Breite besitzen, nämlich zum Beispiel Streifen **5**B doppelt so breit wie Streifen **5**A und Streifen **5**C dreimal so breit wie Streifen **5**A. Ebenso kommen drei verschiedene Lücken **6** a, b, c vor mit verschiedenen Breiten, nämlich Lücke **6**b doppelt so breit wie Lücke **6**a und Lücke **6**c dreimal so breit wie Lücke **6**a.

Ändert man nun ausgehend von einer Gruppe aus drei Streifen und drei Lücken AaBbCc von Gruppe zu Gruppe jeweils die Breite eines Streifens oder einer Lücke an einer jeweils anderen Position in der Gruppe, so ist sichergestellt, dass durch Betrachtung einer Mindest-Abschnittslänge **4** von sechs aufeinanderfolgenden Markierungen an irgendeiner beliebigen Stelle innerhalb des eindeutig codierten Abschnitts die Position jeder Markierung entlang der Bildzeile **3** und damit auch jeder Kante einer Markierung innerhalb dieses Abschnitts bestimmt werden kann.

Zusätzlich wird in der Praxis die rechte Hälfte des Produktes P, insbesondere der von der dargestellten Kamera K nicht mehr einsehbare rechte untere Randbereich des Produktes P, von einer weiteren, rechts vom dargestellten Beamer B vorhandenen - hier nicht dargestellten - Kamera abgetastet.

Auf diese Art und Weise wird für eine Vielzahl von Punkten entlang der Bildzeile **3** die Oberflächenkontur des Produktes P bestimmt, und da hieraus zusätzlich bekannt wird, wo der Beginn und das Ende der Oberflächenkontur des Produktes P auf der Bildzeile **3** endet, auch dessen Lage in Y-Richtung.

Durch Aneinanderreihung aufeinander folgender solcher Zeilen-Aufnahmen auf die sich bewegende Fläche **1** wird für alle Produkte deren Position und Drehlage und auch die Höhenlage der einzelnen Punkte bestimmbar.

**Figur 3a** zeigt, welches Streifenbild eine Vielzahl von aneinander gereihten Streifenbild-Zeilen-Aufnahmen der sich bewegenden Fläche **1** ergeben, wenn dabei die Umfangs-Kontur eines zum Beispiel quader-förmigen Produktes P erfasst wird, die genau im rechten Winkel zur Bewegungsrichtung **10** der Fläche **1** liegt und die genau senkrecht stehende Seitenflächen aufweist:

Die einzelnen Teil-Streifen der Streifen **5**A, B, C des Musters **2** weisen dann an der Umfangs-Kontur einen Versatz **13** zueinander auf, der der Höhe des quaderförmigen Produktes P entspricht, verlaufen aber sowohl im Bereich der Oberfläche des Produktes P gerade, da diese eben, also parallel zur Fläche **1,** verläuft, als auch im Bereich der Fläche **1** selbst.

**Figur 3b** zeigt das sich ergebende Streifenbild bei einem Produkt P mit konvex gewölbter Oberfläche und einem niedrigen, senkrecht stehenden Rand des Produktes P:
Im Bereich der Umfangskontur des Produktes P ergibt sich dann ein Streifenbild, bei dem die Teilstreifen eines Streifens **5**A, B, C zueinander einen Versatz **13** aufweisen, entsprechend der Höhe des senkrechten Randes des Produktes P.

Zusätzlich sind die Teilstreifen, die direkt auf die Fläche **1** aufprojiziert sind, nach wie vor gerade verlaufend, während die Teilstreifen, die auf die konvex gewölbte Oberfläche des Produktes P aufgestrahlt sind, gebogen sind.

### BEZUGSZEICHENLISTE

- **1**: Fläche, Transportband
- **2**: Muster
- **2.1,2.2**: Markierung
- **3**: Bildzeile
- **4**: Mindest-Abschnitt
- **5**A, B, C: Streifen
- **6**a, b, c: Lücke
- **7**: Bereich
- **8**: LED-Leiste
- **9 10,** X: Längsrichtung, Verlaufsrichtung
- **11,** Z: Höhenrichtung, Betrachtungsrichtung
- **12,** Y: Zeilenrichtung
- **13**: Versatz

- **20**: Scanner, Zeilenscanner
- **21**a, b, c: Picker
- **22**: Behälter
- **23**: Behälter-Band
- **24**: Basis
- **25**: Steuerung

- B: Beamer
- h**2**, h**3**: Höhenwert
- K, K**1**: Kamera
- P**1**-P**4**: Produkt
- SP**1**-SP**3**: Ist-Position
- SP**1**'-SP**3**': Soll-Position
- V**2**, V**3**: Versatz

## Patentansprüche

1. Verfahren zum berührungslosen Ermitteln der Position und dreidimensionalen Form von Produkten **(P1, P2)** auf einer sich in Längsrichtung **(10, X)** erstreckenden Fläche **(1),** indem
- quer über die Fläche **(1)** mit den Produkten **(P1, P2)** wenigstens zeitweise ein wenigstens abschnittsweise eindeutig codiertes Muster **(2)** aus optisch abtastbaren Markierungen **(2.1, 2.2, 2.3)** definiert aufgestrahlt wird,
- mittels einer Zeilen-Kamera **(K, K1, K2)** eine Bildzeile, die quer zu den Markierungen im Bereich der Markierungen **(2.1, 2.2, 2.3)** verläuft, die Ist-Position **(SP1, SP2)** der Kanten der Markierungen **(2.1, 2.2, 2.3)** auf der Bildzeile **(3)** aufgenommen wird,
- aus der bekannten Soll-Position **(SP1', SP2')** der Kante in Zeilenrichtung **(12, Y)** und deren Ist-Position **(SP1, SP2)** der Versatz **(V1, V2)** der Kante in Zeilenrichtung **(12, Y)** bestimmt und in einen Höhen-Wert **(h2, h3)** umgerechnet wird,
- aus den Höhenwerten **(h2, h3)** aller Bild-Zeilen-Punkte ein Bild-Zeilen-Höhenprofil bestimmt wird,
- die vorstehenden Schritte nach Relativbewegung der Fläche **(1)** in Längsrichtung **(10, X)** einerseits zu den Markierungen **(2.1, 2.2, 2.3)** sowie andererseits der Bildzeile **(3)** wiederholt werden,
- aus vorzugsweise abstandslos aufeinander folgenden Bild-Zeilen-Höhenprofilen das dreidimensionale Höhenprofil der Fläche **(1)** samt darauf liegenden Produkten **(P1, P2)** erstellt wird,
**dadurch gekennzeichnet, dass**
das eindeutig codierte Muster **(2)** in Zeilenrichtung **(12, Y)** Bereiche **(7.1, 7.2, 7.3)** aufweist, in denen die Farbe des Musters **(2),** also der Markierungen **(2.1, 2.2, 2.3),** innerhalb eines Bereiches **(7.1, 7.2, 7.3)** gleich bleibt, zwei benachbarte Bereiche **(7.1, 7.2, 7.3)** jedoch unterschiedliche Farben aufweisen,
wobei jede Zeilenkamera **(K, K1, K2)** in Zeilenrichtung **(12, Y)** jeweils in der Mitte zwischen je zwei benachbarten Projektoren oder Beamern **(B)** angeordnet ist,
wobei die wenigstens zwei Projektoren oder Beamer **(B)** so angeordnet sind, dass auf der Oberfläche des höchsten zu detektierenden Produktes **(P1, P2)** die letzte Markierung des einen Bereiches unmittelbar der ersten Markierung des benachbarten Bereiches folgt, oder die Bereiche **(7.1, 7.2, 7.3)** dort noch geringfügig überlappen.

2. Verfahren nach Anspruch **1,**
**dadurch gekennzeichnet, dass**
- als optische Markierungen **(2.1, 2.2, 2.3)** mit Lücken **(6)** zueinander angeordnete Streifen **(5),** insbesondere parallel zueinander verlaufende Streifen **(5),** gewählt werden, und/oder
- die Bildzeile **(3)** lotrecht zu der Verlaufsrichtung **(10, X)** der Streifen **(5)** verläuft.

3. Verfahren nach einem der vorhergehenden Ansprüche,
**dadurch gekennzeichnet, dass**
- die Betrachtungsrichtung **(11, Z)** der Kamera **(K, K1, K2)** lotrecht zur Fläche **(1)** steht, und/oder
- die IST-Position **(SP1, SP2)** jeder Kante jeder Markierung **(2.1, 2.2, 2.3)** auf der Bildzeile **(3)** aufgenommen wird.

4. Verfahren nach einem der vorhergehenden Ansprüche,
**dadurch gekennzeichnet, dass**
die wenigstens abschnittweise eindeutig codierten Muster **(2)** so gewählt werden, dass sowohl innerhalb eines im Muster (**2**) frei wählbaren Mindest-Abschnitts (**4**) mit einer definierten Anzahl von Markierungen (**2.1, 2.2, 2.3**) eindeutig die Position im Mindest-Abschnitt (**4**) bestimmt werden kann als auch am Übergang von einem Mindest-Abschnitt **(4)** auf den nächsten eine Codierung vorliegt, die mit keiner Stelle innerhalb eines der Mindest-Abschnitte **(4)** übereinstimmt.

5. Verfahren nach einem der vorhergehenden Ansprüche,
**dadurch gekennzeichnet, dass** innerhalb eines Bereiches **(7.1, 7.2, 7.3)** mehrere **Mindest-**Abschnitte **(4)** des eindeutig codierten Musters **(2)** hintereinander in Zeilen-Richtung **(12, Y)** vorliegen.

6. Verfahren nach einem der vorhergehenden Ansprüche,
**dadurch gekennzeichnet, dass**
- jeder Projektor oder Beamer **(B)** jeweils einen Bereich **(7.1, 7.2, 7.3)** aufstrahlt.

7. Verfahren nach einem der vorhergehenden Ansprüche,
**dadurch gekennzeichnet, dass** der Bildbereich jeder Kamera **(K, K1, K2)** so gewählt ist, dass auf der Oberfläche des höchsten zu detektierenden Produktes **(P1, P2)** die Bildbereiche dieser Kamera **(K1)** mit der übernächsten Kamera **(K3)** unmittelbar aneinander anschließen oder geringfügig überlappen.

8. Verfahren nach einem der vorhergehenden Ansprüche,
**dadurch gekennzeichnet, dass**
jede Kamera **(K, K1, K2)** in der Lage ist, zumindest die beiden Farben der Markierungen der beiden benachbarten Beamer **(B),** deren Muster **(2)** in ihrem Bildbereich aufgestrahlt sind, zu detektieren, vorzugsweise jede Kamera **(K, K1, K2) in** der Lage ist, alle Farben zu detektieren.

9. Verfahren nach einem der vorhergehenden Ansprüche,
**dadurch gekennzeichnet, dass**
bei der Auswertung der Kamerasignale in jedem Bereich **(7.1, 7.2, 7.3)** nur die Aufnahmen mit der Farbe des dort vorliegenden Musters **(2)** verwendet werden, die übrigen Aufnahmen mit anderen Farben verworfen oder anderweitig verwendet werden.

10. Verfahren nach einem der vorhergehenden Ansprüche,
**dadurch gekennzeichnet, dass**
mit den Kameras **(K, K1, K2)** nacheinander, insbesondere alternierend, Original-Farbaufnahmen der Bildzeile **(3)** und Aufnahmen der Muster **(2)** entlang der Bildzeile **(3)** angefertigt werden, und insbesondere die Geschwindigkeit der Relativbewegung der Fläche **(1)** zu den Markierungen **(2.1, 2.2, 2.3)** und der Bildzeile **(3)** zum zeitlichen Abstand der Aufnahmen so bemessen wird, dass die aufsummierten Original-Farbaufnahmen ein vollständiges, zusammenhängendes Farbbild der Fläche **(1)** ergeben und die aufsummierten Streifenbilder der Bildzeile **(3)** ein durchgängiges Streifenbild der Fläche **(1)** ergeben.

11. Verfahren nach einem der vorhergehenden Ansprüche,
**dadurch gekennzeichnet, dass**
die Streifenbilder und/oder die Original-Farbaufnahmen zusätzlich unter Zuschaltung einer Mischlicht-Quelle, insbesondere einer LED-Leiste **(8)** entlang der Zeilenrichtung **(12, Y),** wiederholt werden, die die Fläche **(1)** zusätzlich bestrahlen, insbesondere die Zusatzbeleuchtung in mehreren Stufen zugeschaltet wird.

12. Verfahren nach einem der vorhergehenden Ansprüche,
**dadurch gekennzeichnet, dass**
- für Bereiche **(7)** oder Abschnitte **(4),** in denen eine Kamera **(K1)** kein verwertbares Ergebnis liefert, dieser Bereich **(7)** oder Abschnitt **(4)** aus der Aufnahme der benachbarten Kamera **(K2)** ausgewertet wird, und/oder
- die Muster-Aufnahmen mit den Original-Aufnahmen ohne aufgestrahltes Muster miteinander abgeglichen werden zur Verbesserung der Daten aus den Muster-Aufnahmen.

13. Verfahren nach einem der vorhergehenden Ansprüche,
**dadurch gekennzeichnet, dass**
aus den Streifen-Aufnahmen und den Original-Aufnahmen der ein oder mehreren Kameras **(K, K1, K2)** telezentrische, zweidimensionale Bilder durch Umrechnung erzeugt werden, die die exakte, verzerrungsfreie Position und Drehlage der Produkte **(P1, P2)** auf der Fläche **(1)** wiedergeben.

14. Scanner zum berührungslosen Ermitteln der Position und dreidimensionalen Form von Produkten **(P1, P2)** auf einer sich in Längsrichtung **(10, X)** erstreckenden Fläche **(1),** mit
- wenigstens einer Projektionsvorrichtung mit wenigstens zwei Beamern **(B)** oder Projektoren, die in der Lage ist, ein wenigstens abschnittsweise eindeutig codiertes Muster **(2)** aus optisch abtastbaren Markierungen **(2.1, 2.2, 2.3)** quer über die Fläche **(1)** hinweg aufzustrahlen,
- wenigstens einer Zeilenkamera **(K, K1, K2),** die in der Lage ist, entlang der quer zu den Markierungen **(2.1, 2.2, 2.3)** verlaufenden Bildzeile **(3)** die Ist-Position **(SP1, SP2)** der Kante der Markierungen **(2.1, 2.2, 2.3)** in Zeilenrichtung **(12, Y)** zu ermitteln,
- wobei die Projektionsvorrichtung und die Zeilenkamera **(K, K1, K2)** relativ zur Fläche **(1)** in Längsrichtung **(10, X)** gesteuert bewegbar ist,
- einer Auswerteeinheit, die in der Lage ist, den Versatz **(V2, V3)** einer Kante in Zeilen-Richtung **(12, Y)** zwischen ihrer Soll-Position **(SP1', SP2')** und ihrer Ist-Position **(SP1, SP2)** in einen Höhenwert **(h2, h3)** in Höhen-Richtung **(11, Z)** umzurechnen und zusammen mit dem Y-Wert und dem X-Wert zu speichern,
**dadurch gekennzeichnet, dass**
zwei benachbarte der wenigstens zwei Beamer (B) ihre Muster (**2)** in unterschiedlicher Farbe aufstrahlen,
wobei jede Zeilenkamera **(K, K1, K2)** in Zeilenrichtung **(12, Y)** jeweils in der Mitte zwischen je zwei benachbarten Projektoren oder Beamern **(B)** angeordnet ist,
wobei die wenigstens zwei Projektoren oder Beamer **(B)** so angeordnet sind, dass auf der Oberfläche des höchsten zu detektierenden Produktes **(P1, P2)** die letzte Markierung des einen Bereiches unmittelbar der ersten Markierung des benachbarten Bereiches folgt, oder die Bereiche **(7.1, 7.2, 7.3)** dort noch geringfügig überlappen.

15. Scanner nach Anspruch **14,**
**dadurch gekennzeichnet, dass**
einem Bildschirm, der in der Lage ist, sowohl die hintereinander von der Zeilenkamera **(K, K1, K2)** ausgegebenen Zeilenbilder aufsummiert als Musterdarstellung auszugeben oder die Flächenanteile der Fläche **(1)** abhängig von ihrer Höhenlage in unterschiedlichen Farbabstufungen, z. B. Farbabstufungen oder Graustufen, darzustellen.

16. Scanner nach einem der vorhergehenden Vorrichtungsansprüche,
**dadurch gekennzeichnet, dass**
die Vorrichtung mehrere Projektionsvorrichtungen und mehrere Zeilenkameras **(K, K1, K2)** umfasst, die jeweils gemeinsam an unterschiedlichen Positionen in Längsrichtung **(10, X)** der Fläche **(1)** angeordnet sind.

## Claims

1. A method for touch free determination of a positon and three dimensional shape of products (P1, P2) on a surface (1) that extends in a longitudinal direction (10, X), wherein
- a pattern (2) that is unambiguously coded at least in sections and which includes optically scanable markings (2.1, 2.2, 2.3) is radiated in a defined manner transversally over the surface (1) with the products (P1, P2) at least temporarily.
- an actual position (SP1, SP2) of edges of the markings (2.1, 2.2, 2.3) is captured on an image line (3) by a line camera (K, K1, K2) which captures the image line which extends transversally to the markings in a portion of the markings,
- an offset (V1, V2) of an edge is determined in the line direction (12, Y) from a known nominal position (SP1', SP2') of the edge in a line direction (12 ,Y) and its actual position (SP1, SP2) and computed into an elevation value (H2, H3).
- an image line elevation profile is determined from the elevation values (h2, h3) of all image line points,
- the preceding steps are repeated after a relative movement of the surface (1) in the longitudinal direction (10, X) wherein the steps are repeated relative to the markings (2.1, 2.2, 2.3) and relative to the image line (3),
- a three dimensional profile of the surface (1) including the products (P1, P2) placed thereon is generated from image line elevation profiles which are sequential advantageously without gaps there between,
**characterized in that**
the unambiguously coded pattern (2) includes portions (7.1, 7.2, 7.3) in the line direction (12, Y) in which portions a color of the pattern (2), thus of the markings (2.1, 2.2, 2.3) remains constant within a portion (7.1, 7.2, 7.3) wherein two adjacent portions (7.1, 7.2, 7.3) have different colors,
wherein each line camera (K, K1, K2) is arranged in the line direction (12, Y) respectively in a center between two respectively adjacent projectors or beamers (B),
wherein at least two projectors or beamers (B) are arranged so that on a surface of the tallest product (P1, P2) to be detected a last marking of one portion follows directly after a first marking of an adjacent portion or the portions (7.1, 7.2, 7.3) still overlap slightly at this location.

2. The method according to claim 1,
**characterized in that**
- strips (5) that are arranged with gaps (6) there between are selected as optical markings (2.1, 2.1, 2.3), in particular strips (5) that extend parallel to each other, and/or
- the image line (3) extends perpendicular to the extension (10, X) of the strips (5).

3. The method according to one of the preceding device claims,
**characterized in that**
- a viewing direction (11, Z) of the camera (K1, K2, K3) is perpendicular to the surface (1), and/or
- the actual positon (SP1, SP2) of each edge of each marking (2.1, 2.2, 2.3) is received on the image line (3).

4. The method according to one of the preceding claims,
**characterized in that**
the patterns (2) that are unambiguously coded at least in sections are selected so that a position within a minimum section (4) is determinable within the minimum section (4) that is freely selectable in the pattern (2) and includes a defined number of markings (2.1, 2.2, 2.3) and a coding is provided at a transition from a minimum section (4) to a proximal minimum section (4) wherein the coding does not coincide with any location within one of the minimum sections (4).

5. The method according to one of the preceding claims,
**characterized in that**
plural minimum sections (4) with the unambiguously coded pattern (2) are provided sequentially behind each other in the line direction (12, Y) within a portion (7.1, 7.2, 7.3).

6. The method according to one of the preceding claims,
**characterized in that**
- each projector or beamer (B) respectively irradiates a portion (7.1, 7.2, 7.3).

7. The method according to one of the preceding claims,
**characterized in that**
an image portion of each camera (K, K1, K2) is selected so that image portions of the camera (K1) on a surface of a tallest product (P1, P2) to be detected are directly adjacent to each other or slightly overlap with image portions of a camera (K3) that comes after the next camera.

8. The method according to one of the preceding claims,
**characterized in that**
each camera (K, K1, K2) is configured to detect at least the two colors of markings of two adjacent beamers (B) whose patterns (2) are irradiated in its image portion, wherein each camera (K, K1 K2) is advantageously configured to detected all colors.

9. The method according to one of the preceding claims,
**characterized in that**
during processing of camera signals only images with a color of a pattern (2) are used that is present in a respective portion (7.1, 7.2, 7.3) and remaining images with other colors are discarded or used otherwise.

10. The method according to one of the preceding claims,
**characterized in that** the cameras (K, K1, K2) are used to produce original color images of the image line (3) sequentially in particular in an alternating manner and images of the patterns (2) are produced along the image line (3) and in particular a velocity of the relative movement of the surface (1) relative to the markings (2.1, 2.2, 2.3) and of the image line (3) is adjusted relative to a time interval between the images so that added up original color images generate a complete and coherent color image of the surface (1) and the summed up strip images of the image line (3) yield a continuous strip image of the surface (1).

11. The method according to one of the preceding claims,
**characterized in that**
the strip images and/or the original color images are repeated additionally with an added mixed light source, in particular a LED bar (8) along the line direction (12, Y) which irradiate the surface (1) additionally, wherein the additional illumination is added in plural increments.

12. The method according to one of the preceding claims,
**characterized in that** the
- in portions (7) or sections (4) where a camera (K1) does not provide a processable result the portion (7) or the section (4) from an image of an adjacent camera (2) is processed, and/or
- the pattern images are compared and supplemented with original images without an irradiated pattern in order to improve data from the pattern images.

13. The method according to one of the preceding claims,
**characterized in that**
telecentric two dimensional images are produced by computing from the strip images and the original images of the one or plural cameras (K, K1, K2) wherein the telecentric two dimensional images represent exact and non-distorted positions and rotational orientations of the products (P1, P2) of the surface (1).

14. A scanner for touch free determination of a position and three dimensional shape of products (P1, P2) on a surface (1) that extends in the longitudinal direction (10, X), the scanner comprising:
- at least one projection device with at least two beamers (B) or projectors wherein the projection device is configured to irradiate a pattern (2) that is unambiguously coded at least in sections and includes optically scannable markings (2.1, 2.2, 2.3) wherein the pattern is irradiated transversally over the surface (1),
- at least one camera (K, K1, K2) which is configured to determine an actual positon (SP1, SP2) of an edge of the markings (2.1, 2.2, 2.3) in the line direction (12, Y) along the image line that extends transversally to the markings (2.1, 2.2, 2.3),
- wherein the projection device and the line camera (K, K1 K2) is movable in a controlled manner relative to a surface (1) in the longitudinal direction (10, X),
- a processing unit that is configured to compute an offset (V2, V3) of an edge in a line direction between its nominal position (SP1', SP2') and its actual position (SP1, SP2) into an elevation value (H2, H3) in an elevation direction (11, Z) and to store it together with the Y-value and X-value
**characterized in that**
two adjacent beamers of the at least two beamers (B) irradiate their patterns (2) in different colors,
wherein each line camera (K, K1, K2) is respectively arranged in the line direction (12, Y) in a center between two adjacent projectors or beamers (B),
wherein the at least two projectors or beamers (B) are arranged so that on a surface of a tallest product (P1, P2) that is to be detected a last marking of one portion is directly subsequent to a first marking of an adjacent portion or the portions (7.1, 7.2, 7.3) overlap slightly.

15. The scanner according to claim 14,
**characterized by**
a screen that is configured to put out the line images that are put out sequentially by the line camera (K, K1, K2) summed up as a pattern representation or to represent the surface portions of the surface (1) as a function of its elevation in different color increments e.g. color tones or grey scales.

16. The scanner according to one of the preceding claims,
**characterized in that**
the device includes plural projectors or plural line cameras (K, K1, K2) which are respectively jointly arranged at different positions in the longitudinal direction (10, X) of the surface (1).

## Revendications

1. Procédé pour la détermination sans contact de la position et de la forme tridimensionnelle de produits **(P1, P2)** sur une surface **(1)** s'étendant dans le sens longitudinal **(10, X),**
- en appliquant par irradiation de manière définie, avec les produits **(P1, P2),** en travers de la surface **(1),** au moins temporairement un motif codé distincte au moins en partie **(2)** de marquages optiquement balayables **(2.1, 2.2, 2.3),**
- en capturant au moyen d'une caméra à réseau linéaire **(K, K1, K2)** une ligne d'image s'étendant de manière transversale au marquages dans la région des marquages **(2.1, 2.2, 2.3),** la position réelle **(SP1, SP2)** des bords des marquages **(2.1, 2.2, 2.3)** sur la ligne d'image **(3),**
- en déterminant de la position désirée **(SP1', SP2')** connue du bord dans le sens des lignes **(12, Y)** et de sa position réelle **(SP1, SP2)** le décalage **(V1, V2)** du bord dans le sens des lignes **(12, Y)** et en le convertissant en une valeur de hauteur **(h2, h3),**
- en déterminant sur la base des valeurs de hauteur **(h2, h3)** de tous les points de ligne d'image un profil de hauteur de lignes d'image,
- en répétant les étapes ci-dessus après un mouvement relatif de la surface **(1)** dans le sens longitudinal **(10, X)** d'un côté vers les marquages **(2.1, 2.2, 2.3)** et d'autre côté de la ligne d'image **(3),**
- en établissant le profil de hauteur tridimensionnel de la surface **(1)** avec les produits **(P1, P2)** situés là-dessus, de préférence sur la base de profils de hauteur de lignes d'image successifs sans distance,
**caractérisé en ce que**
le motif codé distincte **(2)** comprend dans le sens des lignes **(12, Y)** des régions **(7.1, 7.2, 7.3)** où la couleur du motif **(2),** i.e. des marquages **(2.1, 2.2, 2.3)** reste la même dans une région **(7.1, 7.2, 7.3),** mais où deux régions adjacentes **(7.1, 7.2, 7.3)** ont des couleurs différentes,
où chaque caméra à réseau linéaire **(K, K1, K2)** est situé dans le sens des lignes **(12, Y)** à mi-chemin entre deux projecteurs ou vidéoprojecteurs **(B)** adjacents,
où les au moins deux projecteurs ou vidéoprojecteurs **(B)** sont arrangés de sorte que sur la surface du produit **(P1, P2)** le plus haut à détecter le dernier marquage d'une région succède directement au premier marquage de la région adjacente ou que les régions **(7.1, 7.2, 7.3)** se chevauchent légèrement.

2. Procédé selon la revendication **1,**
**caractérisé en ce que**
- des bandes **(5)** arrangées avec des espaces **(6)** entre elles, en particulier des bandes **(5)** parallèles, sont choisies en tant que marquages optiques **(2.1, 2.2, 2.3),** et/ou
- la ligne d'image **(3)** est perpendiculaire par rapport au sens **(10, X)** des bandes **(5).**

3. Procédé selon une des revendications précédentes,
**caractérisé en ce que**
- le sens d'observation **(11, Z)** de la caméra **(K, K1, K2)** est perpendiculaire par rapport à la surface **(1),** et/ou
- la position réelle **(SP1, SP2)** de chaque bord de chaque marquage **(2.1, 2.2, 2.3)** sur la ligne d'image **(3)** est prise.

4. Procédé selon une des revendications précédentes,
**caractérisé en ce que**
les motifs codés distinctes au moins en partie **(2)** sont sélectionnés de sorte qu'au sein d'une section minimum **(4)** libre à sélectionner au sein du motif **(2)** avec un nombre défini de marquages **(2.1, 2.2, 2.3),** la position au sein de la section minimum **(4)** peut être déterminée clairement et **en ce qu'**il y a en outre un codage à la transition d'une section minimum **(4)** à la suivante qui ne correspond à aucun endroit au sein d'une des sections minimum **(4).**

5. Procédé selon une des revendications précédentes,
**caractérisé en ce que**
dans une région **(7.1, 7.2, 7.3)** plusieurs sections **minimum (4)** du motif codé distincte **(2)** sont arrangés successivement dans le sens des lignes **(12, Y).**

6. Procédé selon une des revendications précédentes,
**caractérisé en ce que**
- chaque projecteur ou vidéoprojecteur **(B)** applique respectivement une région **(7.1, 7.2, 7.3)** par irradiation.

7. Procédé selon une des revendications précédentes,
**caractérisé en ce que**
la zone d'image de chaque caméra **(K, K1, K2)** est choisie de sorte que sur la surface du produit **(P1, P2)** le plus haut à détecter les zones d'image de cette caméra **(K1)** se raccordent directement à la deuxième caméra **(K3)** ou se chevauchent légèrement.

8. Procédé selon une des revendications précédentes,
**caractérisé en ce que**
chaque caméra **(K, K1, K2)** est en mesure de détecter au moins les deux couleurs des marquages des deux projecteurs **(B)** adjacents, dont les motifs **(2)** sont appliqués dans leur zone d'image, et **en ce que** de préférence chaque caméra **(K, K1, K2)** est en mesure de détecter toutes les couleurs.

9. Procédé selon une des revendications précédentes,
**caractérisé en ce que**
lors de l'évaluation des signaux de la caméra dans chaque région **(7.1, 7.2, 7.3)** seulement les images avec la couleur du motif **(2)** présent peuvent être utilisées et les autres images avec d'autres couleurs sont rejetées ou utilisées à d'autres fins.

10. Procédé selon une des revendications précédentes,
**caractérisé en ce que**
des images en couleur originales de la ligne d'image **(3)** et des images des motifs **(2)** le long de la ligne d'image **(3)** sont faites successivement, en particulier de manière alternante, avec les caméras **(K, K1, K2)** est **en ce qu'**en particulier la vitesse du mouvement relatif de la surface **(1)** par rapport aux marquages **(2.1, 2.2, 2.3)** et la ligne d'image **(3)** à la distance temporelle des images est calculée de sorte que les images en couleur originales additionnées donnent une image colorées cohérente entière de la surface **(1)** et **en ce que** les images de bande additionnées de la ligne d'image **(3)** donnent une image de bande cohérente de la surface **(1).**

11. Procédé selon une des revendications précédentes,
**caractérisé en ce que**
les images de bande et les images en couleur originales sont refaites en ajoutant une source de lumières mixtes, en particulier une barre LED **(8)** le long du sens de ligne **(12, Y)** qui irradient aussi la surface **(1),** et **en ce que** l'éclairage supplémentaire est ajoutée en plusieurs échelons.

12. Procédé selon une des revendications précédentes,
**caractérisé en ce que**
- pour des régions **(7)** ou des sections **(4)** où une caméra **(K1)** ne donne pas de résultat utilisable, cette région **(7)** ou section **(4)** est prise de la caméra adjacente **(K2)** et évaluée,
et/ou
- les images de motif sont comparées aux images originales sans motif appliqué par irradiation pour améliorer les dates des images de motif.

13. Procédé selon une des revendications précédentes,
**caractérisé en ce que**
des images télécentriques a deux dimensions sont générées par conversion des images de bande et des images originales de ladite une ou des plusieurs caméras **(K, K1, K2)** qui rendent la position exacte et sans distorsion et la position de rotation des produits **(P1, P2)** sur la surface **(1).**

14. Scanner pour la détermination sans contact de la position et de la forme tridimensionnelle de produits **(P1, P2)** sur une surface **(1)** s'étendant dans le sens longitudinal **(10, X),** avec
- au moins un dispositif de projection avec au moins deux vidéoprojecteurs **(B)** ou projecteurs qui sont capables d'appliquer par irradiation en travers de la surface **(1)** un motif codé distincte au moins en partie **(2)** de marquages optiquement balayables **(2.1, 2.2, 2.3),**
- au moins une caméra à réseau linéaire **(K, K1, K2)** capable de déterminer le long de la ligne d'image **(3)** s'étendant de manière transversale aux marquages **(2.1, 2.2, 2.3)** la position réelle **(SP1, SP2)** du bord des marquages **(2.1, 2.2, 2.3)** dans le sens des lignes **(12, Y),**
- où le dispositif de projection et la caméra à réseau linéaire **(K, K1, K2)** peuvent être déplacés de manière contrôlée par rapport à la surface **(1)** dans le sens longitudinal **(10, X),**
- une unité d'évaluation qui est capable de convertir le décalage **(V2, V3)** d'un bord dans le sens des lignes **(12, Y)** entre sa position désirée **(SP1', SP2')** et sa position réelle **(SP1, SP2)** en une valeur de hauteur **(h2, h3)** dans le sens de la hauteur **(11, Z)** et de le sauvegarder avec la valeur Y et la valeur X,
**caractérisé en ce que**
deux vidéoprojecteurs adjacents desdits au moins deux vidéoprojecteurs **(B)** appliquent par irradiation leurs motifs **(2)** en couleurs différentes,
où chaque caméra à réseau linéaire **(K, K1, K2)** est situé dans le sens des lignes **(12, Y)** à mi-chemin entre deux projecteurs ou vidéoprojecteurs **(B)** adjacents,
où les au moins deux projecteurs ou vidéoprojecteurs **(B)** sont arrangés de sorte que sur la surface du produit **(P1, P2)** le plus haut à détecter le dernier marquage d'une région succède directement au premier marquage de la région adjacente ou les régions **(7.1, 7.2, 7.3)** se chevauchent légèrement.

15. Scanner selon la revendication **14,**
**caractérisé par**
un moniteur qui est capable d'émettre les images en ligne additionnées émises successivement par la caméra à réseau linéaire **(K, K1, K2)** sous forme de représentation de motifs ou de visualiser les parties de la surface **(1)** en fonction de leur hauteur dans des dégradés de couleurs différents, par exemple des dégradés de couleur ou des dégradés de gris.

16. Scanner selon une des revendications précédentes du dispositif,
**caractérisé en ce que**
le dispositif comprend plusieurs dispositifs de projection et plusieurs caméras de lignes **(K, K1, K2)** qui sont arrangés ensemble à des positions différentes dans le sens longitudinal **(10, X)** de la surface **(1).**
